# DEMANDE DE BREVET EUROPEEN

(11) **EP 0 963 128 A1**
(43) Date de publication de la demande: **08.12.1999**
(21) Numéro de dépôt: 99401294.6
(22) Date de dépôt: 31.05.1999
(51) Int. Cl.: H04Q 7/24, H04Q 7/30

(54) **Procédé de communication avec des mobiles de type hybride CDMA/GSM**

(30) Priorité: 03.06.1998 FR 9806951
(71) Demandeur: FRANCE TELECOM, 75015 Paris (FR)
(72) Inventeur: Medici, Hélène, 75006 Paris (FR); Thomas, Rémi, 75005 Paris (FR)
(74) Mandataire: Signore, Robert

(57) **Abrégé**

Selon l'invention, les protocoles sont organisés en couches selon l'organisation générale définie par la norme GSM, y compris à l'interface radioélectrique, une première couche spécifiant la transmission CDMA à l'interface radioélectrique et d'autres couches spécifiant d'autres fonctions.

Application au téléphone mobile.

## Description

### Domaine technique

La présente invention a pour objet un procédé de communication avec des mobiles de type hybride CDMA/GSM. L'acronyme CDMA signifie "Code Division Multiple Access" ou "Accès Multiple à Répartition dans les Codes" et le sigle GSM signifie "Global System for Mobile Communications" ou système global de communication avec des mobiles.

### Etat de la technique antérieure

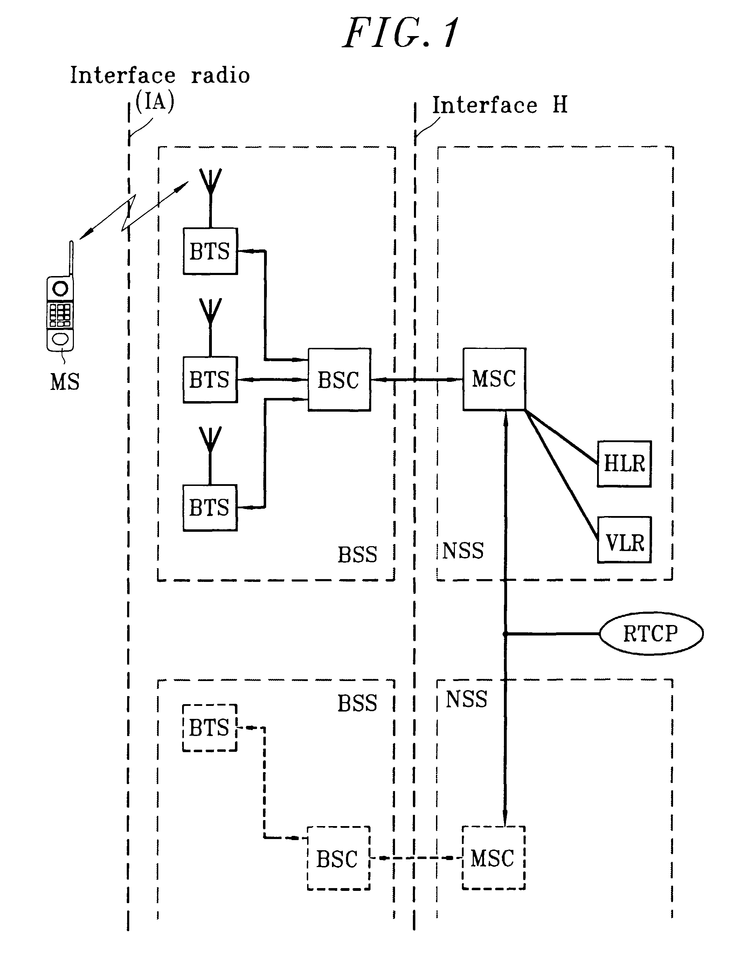

Le système de communication avec des mobiles dit GSM est aujourd'hui bien connu. Il fait l'objet de normes internationales (notamment GSM 04.08 et GSM 08.08) . Le but d'un réseau GSM est d'offrir des services de télécommunications à des abonnés, quels que soient leurs déplacements à l'intérieur d'une zone de service définie par un opérateur, ou même par plusieurs opérateurs ayant passé des accords commerciaux d'itinérance. Pour ce faire, le système est pourvu de moyens représentés schématiquement sur la figure 1 annexée. Ces moyens comprennent :
- des sous-systèmes radio (BSS) ("Base Station System") comprenant des stations de base BTS ("Base Transceiver Station") assurant une couverture radioélectrique et un contrôleur de station de base BSC ("Base Station Controller") relié à une ou plusieurs stations de base BTS ;
- des sous-systèmes réseau NSS ("Network Sub-System") comprenant notamment un commutateur du service mobile MSC ("Mobile Switching Center"), relié à un enregistreur de localisation nominal HLR ("Home Location Register") et à un enregistreur de localisation des visiteurs VLR ("Visitor Location Register") ; les sous-systèmes réseau NSS sont reliés au réseau téléphonique commuté public RTCP ;
- des stations mobiles MS ("Mobile Stations").

Les deux types de sous-systèmes, à savoir radio (BSS) et réseau (NSS), communiquent à travers l'interface A, alors que les stations mobiles MS communiquent avec les stations de base BTS à travers une interface radioélectrique.

Par ailleurs, divers protocoles établissent des règles et procédures permettant aux différents moyens de coopérer, notamment à l'interface radioélectrique et à l'interface A.

Un système de communication de ce type fonctionne schématiquement de la manière suivante.

L'abonné mobile dispose d'une station mobile MS qui comprend généralement deux éléments séparables :
- un équipement mobile, qui fournit les capacités radio et logicielles nécessaires au dialogue avec le réseau ;
- une carte amovible, du type carte bancaire, dite "SIM" ("Subscriber Identification Module" ou module d'identification de l'abonné) qui contient les caractéristiques de l'abonné et ses droits, en particulier son identité internationale IMSI ("International Mobile Station Identity").

L'interface radioélectrique (dénommée par la suite "interface radio") est l'interface entre une telle station mobile MS et le sous-système radio BSS dont elle dépend. Les protocoles de signalisation de l'interface radio sont structurés en trois couches :
- une couche 1, ou couche physique, définit l'ensemble des moyens de transmission et de réception physique de l'information ; pour l'interface radio du GSM, cette couche assure notamment des fonctions de codage correcteur d'erreur et de multiplexage des canaux logiques ; l'interface radio du GSM utilise la technique de l'Accès Multiple à Répartition dans le Temps AMRT (en anglais TDMA pour "Time Division Multiple Access") ; un canal radio fournit huit intervalles de temps ; les structures de trames et multitrames, supports des canaux logiques, utilisent la succession de ces intervalles de temps ;
- une couche 2, ou liaison de données, est chargée de la gestion de la transmission sur l'interface radio par utilisation d'un protocole, comportant notamment des mécanismes d'acquittement et de retransmission ; la couche 2 de l'interface radio -également nommée LAPDm ("Link Access Procedures on the Dm Channels")- est décrite dans la norme GSM 04.06 ;
- une couche 3 est chargée de l'établissement, du maintien et de la libération des circuits utilisés pour une transmission ; la couche 3 de l'interface radio est subdivisée en trois sous-couches :
   - une première sous-couche RR ("Radio Resource") spécifiant la gestion des ressources radio,
   - une deuxième sous-couche MM ("Mobility Management Specification") spécifiant la gestion de la mobilité,
   - une troisième sous-couche CM ("Connection Management") spécifiant la gestion des connexions.

La sous-couche CM comprend plusieurs entités parallèles relatives à la gestion des services supplémentaires (similaires aux "services de confort" du réseau fixe), au service de messages courts, et au contrôle d'appel ("Call Control", CC).

La sous-couche RR est chargée de l'allocation, de la relâche et de la supervision des canaux radio, ce qui comprend l'envoi de mesures par la station mobile au réseau et les procédures de changement de cellule (transfert automatique intercellulaire dit, en anglais, "handoff" ou "handover"). La sous-couche RR comprend aussi les messages reçus par la station mobile MS en mode de veille et la procédure de chiffrement.

La sous-couche MM assure la localisation continue des stations mobiles MS. Cette sous-couche remplit également deux fonctions de sécurité : l'authentification, qui permet au réseau de vérifier l'exactitude de l'identité annoncée par une station mobile MS, et la confidentialité de l'identité dont le but est d'empêcher un pirate, qui écouterait l'interface radio, de suivre les mouvements d'un abonné mobile. La sous-couche MM permet enfin aux stations mobiles MS d'établir des connexions virtuelles qui seront utilisées par la sous-couche CM.

La sous-couche CM a pour fonction l'établissement et la relâche d'appels entre une station mobile MS et un abonné d'un réseau fixe ou mobile.

Cette structure de la couche 3 de l'interface radio est spécifiée dans la norme GSM 04.08.

L'aire de service est partitionnée en petites zones géographiques nommées cellules. Les stations de base BTS assurent la couverture radio de cette aire de service. Chaque cellule est associée à une station de base particulière. Chacune des stations de base comprend une ou plusieurs porteuses qui fournissent un canal de diffusion, un canal de contrôle commun, des canaux de signalisation dédiés et des canaux de trafic dédiés.

D'un point de vue physique, les informations circulent entre les stations mobiles MS et les stations de base BTS, mais d'un point de vue logique, les stations mobiles MS communiquent avec des entités du sous-système radio BSS et avec le commutateur du service mobile MSC.

La couche 1 et la couche 2 sont gérées par la station de base BTS. La sous-couche RR est gérée par le contrôleur de station de base BSC et les sous-couches MM et CC par le commutateur de service mobile MSC ; ces correspondances signifient essentiellement que :
- la station de base BTS gère la transmission radioélectrique ;
- le contrôleur de station de base BSC organise la supervision, l'allocation et la relâche des canaux radio, ces deux dernières actions étant généralement effectuées conformément à des commandes reçues du commutateur du service mobile MSC ;
- le commutateur du service mobile MSC gère l'établissement d'appel, la relâche d'appel et ce qui est lié aux identités des abonnés et à la mobilité.

Les deux principales interfaces externes du sous-système radio BSS sont, d'une part, l'interface radio située du côté de la station mobile et, d'autre part, l'interface A située vers le sous-système réseau NSS. Les couches basses de l'interface A sont fondées sur deux protocoles du système de signalisation n°7, le MTP ("Message Transfer Part") et le SCCP ("Signaling Connection Control Part") . L'interface A est une interface terrestre classiquement constituée de liaisons MIC (Modulation à Impulsions Codées). Les couches applicatives de l'interface A sont spécifiques du GSM. Il s'agit de :
- la couche BSSMAP ("BSS Management Application Part"), affectée à la gestion du sous-système radio BSS, et dont l'objet est essentiellement la gestion des ressources radioélectriques et des ressources terrestres entre le sous-système radio BSS et le sous-système réseau NSS ;
- la couche DTAP ("Direct Transfer Application Part"), qui est utilisée pour le dialogue transparent entre station mobile MS et le commutateur du service mobile MSC.

Il existe une relation forte entre la couche BSSMAP de l'interface A et la sous-couche RR de l'interface radio lors de l'établissement d'un chemin dédié entre la station mobile MS et le commutateur du service mobile MSC, des commandes par le commutateur du service mobile MSC de l'allocation et de la relâche d'un canal radio utilisant des procédures BSSMAP. Les messages transportés selon le protocole DTAP sont des messages CM ou MM spécifiés dans la norme GSM 04.08 ; l'ensemble des messages pour le contrôle d'appel, l'essentiel des messages de gestion de la mobilité, sont transportés par le protocole DTAP.

Quant au sous-système réseau NSS, qui comprend essentiellement les trois entités fonctionnelles que sont le commutateur du service mobile MSC, l'enregistreur de localisation nominal HLR et l'enregistreur de localisation de visiteurs VLR. Il fonctionne de la manière suivante.

Le commutateur du service mobile MSC possède, en plus de l'interface A, des interfaces avec les réseaux fixes. Ce commutateur est capable d'effectuer toutes les fonctions nécessaires à la gestion des appels en provenance ou à destination des abonnés mobiles localisés dans son aire. De plus, il gère les conséquences de la mobilité des abonnés. Pour ce faire, il utilise les enregistreurs de localisation des visiteurs VLR et les enregistreurs de localisation nominaux HLR. Chaque commutateur du service mobile MSC possède un enregistreur de localisation des visiteurs VLR associé. Les échanges de signalisation entre ces entités sont spécifiés dans l'application du service mobile MAP ("Mobile Application Part").

L'enregistreur de localisation nominal HLR est une base de données qui assure la gestion des abonnés mobiles. Tout abonné mobile est enregistré dans un unique enregistreur HLR, qui contient notamment la description de ses droits ainsi que les données de routage pour cet abonné, données continûment variables. L'enregistreur de localisation nominal HLR connaît l'adresse du VLR dans lequel l'abonné mobile est enregistré. Cette information lui est fournie par l'enregistreur de localisation des visiteurs VLR où se trouve l'abonné mobile.

Deux données sont liées à tout abonné mobile et sont donc stockées dans son enregistreur HLR : l'identité internationale de l'abonné mobile IMSI ("International Mobile Station Identity") et le numéro RNIS (Réseau Numérique à Intégration de Services) de l'abonné mobile, soit MSISDN ("Mobile Station International ISDN Number").

Un réseau GSM comprend un ou plusieurs enregistreurs HLR suivant le nombre d'abonnés et l'organisation du réseau.

Quant à l'enregistreur de localisation des visiteurs VLR, il stocke localement les données nécessaires aux appels entrants et sortants des abonnés mobiles qui sont enregistrés dans sa base de données. Ces abonnés mobiles sont ceux qui se trouvent dans ses zones de localisation.

L'enregistreur VLR conserve les éléments suivants : l'identité internationale de l'abonné mobile IMSI, l'identité temporaire de l'abonné mobile, TMSI, le numéro MSISDN et la zone de localisation où l'abonné mobile a été enregistré.

Le système GSM qui vient d'être décrit n'est pas le seul système de communication avec des mobiles en opération. Il existe, notamment aux Etats-Unis d'Amérique, un autre système fondé sur une transmission radioélectrique utilisant non plus la technique d'accès multiple à répartition dans le temps (TDMA) mais la technique d'accès multiple à répartition par codes (AMRC ou CDMA pour "Code Division Multiple Access"). Cette technique est définie dans une norme IS-95 et le sous-système réseau correspondant est défini par la norme IS-41. Pour simplifier, on désignera par la suite ce système par "système CDMA IS-95".

Un système CDMA IS-95 est constitué sensiblement des mêmes moyens que ceux du GSM, comme représenté sur la figure 1 déjà décrite. Le système comprend, lui aussi, un sous-système réseau avec un commutateur du service mobile, que l'on appellera MSC IS-41, et un sous-système radio constitué de stations de base BTS assurant la couverture radioélectrique. Mais, contrairement au GSM, l'architecture des stations de base du CDMA IS-95 n'est pas normalisée. Certains constructeurs ont repris l'architecture GSM dans laquelle un contrôleur de stations de base BSC contrôle une ou plusieurs stations de base BTS mais d'autres ne définissent pas de tels contrôleurs BSC.

Chaque station de base est reliée à une antenne qui peut être omnidirectionnelle, bisectorielle ou trisectorielle : suivant le type d'antennes, chaque station de base comprend un ou plusieurs secteurs. Le secteur est l'objet vu par la station mobile ; il est analogue à la cellule du GSM.

L'abonné est identifié par le numéro de série de son mobile ESN ("Electronic Serial Number") et par son numéro d'appel MIN ("Mobile Identity Number"). Le numéro de série ESN est attribué par le constructeur de la station mobile alors que le numéro d'appel MIN est attribué par l'opérateur. L'identité de l'abonné mobile est définitivement liée à l'identité du terminal mobile (ESN) ; ceci apparaîtra ci-dessous dans la description de l'authentification . Ce sont les mêmes limitations que dans les systèmes mobiles de première génération.

De plus, les nouvelles versions des normes américaines ont introduit la notion d'identité internationale IMSI ("International Mobile Station Identity").

Les systèmes cellulaires sont identifiés par un identifiant de système SID ("System Identifier"). Les réseaux dans un identifiant SID sont identifiés par un identifiant de réseau NID ("Network Identifier"). Un réseau est identifié de façon unique par une paire d'identifiants (SID, NID). La station mobile possède une liste de une ou plusieurs paires (SID, NID) nominales, c'est-à-dire d'identifiants uniques de réseaux dans lesquels elle n'est pas considérée comme étant en itinérance. La station mobile est considérée comme étant en itinérance lorsque la paire (SID, NID) diffusée par le réseau capté ne correspond à aucune paire (SID, NID) stockée.

Les systèmes américains définissent deux sortes d'itinérance :
- une itinérance de réseau : le SID de la paire (SID, NID) reçue par la station mobile est égal au SID d'une des paires (SID, NID) stockées par la station mobile ;
- une itinérance de système : aucune paire (SID, NID) stockée par la station mobile n'a un SID correspondant au SID reçu du réseau visité.

La question de la sécurité des échanges, et notamment de l'authentification des abonnés, est réglée à travers deux procédures :
- la première utilise, suivant les cas (enregistrement, appel entrant, appel sortant) le numéro de série électronique ESN, le numéro d'appel MIN ou une partie du numéro appelé ; de plus, elle utilise un nombre aléatoire noté RAND diffusé sur les canaux communs à tous les mobiles (ce nombre RAND est donc identique pour tous les mobiles) ; elle utilise également une clef partagée SSD ("Shared Secret Data") entre le réseau et le mobile, en plus d'une clef secrète codée en dur dans le mobile et connue seulement du centre d'authentification ; les échanges d'information liés à cette procédure se passent sur les canaux communs en clair et donc écoutables par tout intrus ;
- cette première procédure étant peu sécurisée, une seconde procédure peut avoir lieu, sur commande du réseau ; cette procédure a lieu sur les canaux dédiés qui ont auparavant été alloués à la communication ; le réseau envoie alors un nombre aléatoire au mobile, qui doit renvoyer une réponse signée, fonction de l'ESN et de ce nombre aléatoire (l'ESN joue donc le rôle d'identité d'abonné) ; d'autre part, régulièrement, le réseau initie la procédure de mise à jour de la clé partagée SSD.

Pour le cryptage, le système CDMA IS-95 distingue le cryptage du trafic d'usager (appelé mode privé) et le cryptage de la signalisation. Le mode privé est réalisé en utilisant un code masque long privé, calculé à partir de la clef partagée SSD. Mais ce cryptage semble peu efficace. Le cryptage de la signalisation opère sur les éléments d'information des messages de niveau 3, contrairement au GSM où c'est l'ensemble du niveau 1 qui est crypté. La méthode CDMA IS-95 implique une plus grande complexité dans le traitement des messages envoyés et reçus par le réseau et la station mobile.

L'interface radioélectrique du CDMA IS-95 est structurée en deux couches :
- une couche 1, ou couche physique, qui définit l'ensemble des moyens de transmission et de réception physique de l'information ; cette transmission est de type CDMA, comme déjà indiqué, et non TDMA ; cette première couche assure notamment des fonctions de codage correcteur d'erreurs, et de multiplexage des canaux d'usager ;
- une couche 3, ou réseau, chargée de l'établissement, du maintien et de la libération des circuits utilisés pour une transmission ; contrairement au GSM, la couche 3 n'est pas divisée en types de protocoles RR, MM, CM, et, de plus, elle contient quelques fonctionnalités de la couche de liaison de données (couche 2 du modèle ISO) : numérotation des messages nécessitant un acquittement, demande d'acquittement, acquittement du dernier message nécessitant un acquittement ; il n'y a aucun mécanisme de retransmission, ni de segmentation de messages ; chaque message de la couche 3 peut contenir des informations correspondant aux différentes fonctionnalités RR, MM et CM du GSM.

S'agissant de la technique CDMA, par opposition à la technique TDMA, les observations suivantes, peuvent être faites.

La transmission sur un spectre de large bande permet au signal de résister aux interférences qui peuvent se produire à une fréquence particulière mais qui ne concernent qu'une partie du signal. De plus, la capacité offerte en terme de débit de transmission augmente avec la largeur du spectre. Enfin, étaler le spectre permet d'optimiser le rapport signal à bruit.

Dans les systèmes TDMA, où la largeur de bande des canaux est faible, augmenter celle-ci revient à augmenter la probabilité qu'en réception il y ait moins d'erreurs. En effet, chaque signal est une combinaison de la fréquence fondamentale et de ses harmoniques. Augmenter la largeur de bande revient à prendre plus d'harmoniques et donc à réaliser un signal plus proche de la réalité.

Mais une telle méthode trouve rapidement ses limites parce qu'il est difficile d'augmenter la largeur de bande d'un canal en raison des limitations de la largeur de bande radio attribuée à un opérateur. On doit donc, en TDMA, utiliser une autre méthode. Les signaux à spectre étroit doivent être transmis avec suffisamment de puissance pour affronter le bruit gaussien : le rapport signal bruit doit être assez grand.

En revanche, en CDMA, on peut utiliser une largeur de canal plus grande. A taux d'erreurs donné, le rapport signal à bruit peut donc être plus faible qu'en TDMA. A niveau de puissance plus faible, on garde le même débit.

En CDMA, on parle de séquence directe lorsqu'on utilise la technique d'étalement de spectre par laquelle la bande d'un signal est élargie en augmentant artificiellement le débit de données. Cela s'obtient en divisant chaque bit du signal en un certain nombre de "sous-bits" appelés "chips". L'obtention des chips (et donc du signal codé) est réalisée en multipliant le signal par une séquence pseudo-aléatoire de bruit PN ("Pseudo Noise"). Cette dernière est appelée "séquence de bruit" car elle donne au signal l'apparence d'un bruit et "pseudo-aléatoire" car la suite binaire qui la compose semble être aléatoire tout en étant parfaitement déterminée. Elle consiste en une suite d'impulsions binaires à haut débit produite par un registre à décalage.

Les canaux descendants (d'une station de base vers une station mobile) sont composés du canal pilote, du canal de synchronisation, du canal d'appel ("paging") et des canaux de trafic. Les stations de base BTS étant parfaitement synchronisées par le système GPS ("Global Positioning System"), il est possible d'utiliser des codes orthogonaux appelés codes de WALSH pour chaque canal, ainsi qu'une séquence PN identique pour toutes les stations de base BTS dont le décalage est propre à chaque station de base . Ce décalage doit être suffisant pour qu'un mobile ne confonde pas deux stations de base voisines en réception du fait du retard provoqué par les trajets multiples.

L'IS-95 utilise 64 codes de WALSH CW qui sont répartis de la manière suivante :
- CW = "0" : canal pilote
- CW = "32" : canal de synchronisation
- CW = "1, ..., 7" : canaux d'appel ("paging")
- CW = "8 ... 31" et "33 ... 63" : canaux de trafic.

Si une deuxième porteuse est utilisée, elle est alors configurée en un canal pilote et 63 canaux de trafic.

En réception, au niveau du mobile, la corrélation entre le code de WALSH qu'utilise la station de base et ce même code connu par le mobile permet de retrouver le spectre du canal destiné au mobile. En fin de parcours, la séquence de longueur 2¹⁵ qui est la même pour toutes les stations de base (au décalage près) permet d'étaler le spectre en phase et en quadrature.

Le canal pilote n'est pas modulé. Il n'y a donc ni indicateur de qualité de trame, ni nombre aléatoire (Random), ni codeur convolutif, ni répéteur de symboles, ni entrelacement, ni séquence longue PN. L'étalement en phase et en quadrature est réalisé par une séquence courte PN de longueur 2¹⁵. Le canal pilote sert de voie balise afin que la station mobile puisse se synchroniser sur la station de base.

Le canal de synchronisation subit le codage convolutif, la répétition de symboles, l'entrelacement et les étalements orthogonaux par séquence de WALSH et par séquence courte PN de longueur 2¹⁵. Sur ce canal, la station de base transmet le message de synchronisation comportant des informations qui permettront à la station mobile d'acquérir les paramètres fins du réseau.

Le canal d'appel ("paging") subit le codage convolutif, la répétition de symboles, l'entrelacement, l'embrouillage ("data scrambling") à partir d'une séquence longue de longueur 2⁴² produite à partir du code masque long, et les étalements orthogonaux par séquence de WALSH et par séquence courte PN de longueur 2¹⁵.

Pour ce qui est des canaux de trafic descendants, il faut observer tout d'abord que les données passent par un indicateur de qualité de trame. Lorsque le débit du vocodeur est soit de 9600 bps, soit de 4800 bps (pour un vocodeur 8 kbps), celui-ci ajoute des bits. Ensuite, les trames subissent le codage convolutif, la répétition de symboles, l'entrelacement, l'embrouillage ("data scrambling") à partir de la séquence longue de longueur 2⁴² produite à partir du code masque long, l'ajout des bits de contrôle de puissance et les étalements orthogonaux par séquence de WALSH et par séquence courte PN de longueur 2¹⁵.

Les canaux montants sont composés des canaux d'accès et des canaux de trafic. Les mobiles sont synchronisés par les stations de base BS, lesquelles le sont par le système GPS. Cependant, la synchronisation n'est pas parfaite puisqu'elle dépend des délais de propagation ; il est donc impossible d'utiliser les codes orthogonaux de WALSH de la même manière que sur le lien descendant. On utilise alors d'autres codes qui dépendent du mobile.

En réception, au niveau d'une station de base, chaque canal d'accès ("Access Channel") est identifié par la séquence longue de canal d'accès réalisée à partir d'indications données par la station de base. Quant au canal de trafic, il est identifié par la séquence longue de l'utilisateur, code unique basé sur le numéro de série électronique ESN du mobile lui-même, (numéro attribué par le fabricant) qui reste le même quelle que soit la station de base. D'autre part, le fait de préférer un code propre au mobile par rapport à un code fourni par la station de base facilite la procédure de transfert automatique ("handoff"). En effet, avec ce code unique dépendant du mobile, la modulation dans le sens montant ne change jamais même lors d'un transfert automatique. C'est cette séquence longue utilisée qui étale le signal.

Une différence importante entre le système GSM et le système CDMA IS-95 concerne le transfert automatique.

Dans le système CDMA IS-95, le transfert automatique est de type souple ("soft") alors que dans le système GSM il est de type dur ("hard"). La procédure de transfert automatique souple ("soft-handoff") est la conséquence directe de la macro-diversité. Par macro-diversité, on entend le fait qu'une station mobile maintient, pour une même communication, plusieurs connexions avec différentes stations de base du réseau. Dans le transfert automatique souple, la station mobile va établir un lien avec une nouvelle station de base avant de supprimer le lien avec l'ancienne.

Pour le processus de transfert automatique, une station mobile, durant une connexion donnée, classe les canaux pilotes qu'elle mesure dans trois ensembles qui évoluent avec le temps. Le premier ensemble est celui des pilotes "actifs" : il s'agit des pilotes des cellules avec lesquelles le mobile est en communication. Le deuxième ensemble est celui des pilotes "candidats" : il s'agit des pilotes qui ont un niveau suffisant pour qu'une communication puisse être établie avec les cellules correspondantes. Le troisième ensemble est celui des pilotes "voisins" : il s'agit des autres pilotes mesurés par le mobile.

Les évolutions de ces ensembles sont fonction des mesures continûment effectuées par le mobile et des décisions du réseau.

Lors de ces évolutions les trois règles suivantes sont respectées :
- n'entrent dans l'ensemble des "candidats" que des pilotes situés auparavant dans l'ensemble des "voisins" et qui ont dépassé un certain seuil ;
- n'entrent dans l'ensemble des "actifs" que des pilotes situés auparavant dans l'ensemble des "candidats" ; une telle transition est ordonnée par le réseau durant l'activation d'un transfert automatique souple ou très souple ;
- en mode diversité, lors de la suppression d'un canal de trafic, le canal pilote associé est retiré de l'ensemble des "actifs" et passe dans l'ensemble des "voisins".

Une station mobile peut rester un certain temps en transfert automatique souple: la macro diversité augmente la qualité de la transmission puisque le réseau et la station mobile sélectionnent les meilleures trames reçues. La contre partie est la baisse de capacité du réseau : lorsque la station mobile est en transfert automatique souple, les ressources radio utilisées pour la diversité sont indisponibles pour d'autres communications.

La gestion de la sélection des meilleures trames se fait de la façon suivante : une station de base est désignée comme maître de la communication par le réseau (par défaut c'est la première avec laquelle le mobile a établi la communication) . Les autres stations avec lesquelles le mobile a des liens actifs sont désignées "esclaves". Toutes les stations de base possèdent un transcodeur doublé d'un sélectionneur. Seul le transcodeur/sélectionneur de la station maître est activé. Les stations esclaves lui transmettent les trames reçues du mobile et il sélectionne les meilleures.

En vue de ce transfert automatique, l'IS-634 spécifie le dialogue via le MSC entre les BTS esclaves et le transcodeur/sélectionneur actif.

L'IS-634 spécifie également le dialogue entre le transcodeur/sélectionneur et le MSC pour l'envoi des trames choisies et transcodées vers le PSTN.

Dans certains modes de réalisation, exploités notamment par la Société QUALCOMM, il est fait usage d'un circuit supplémentaire appelé transcodeur-sélecteur, noté T/S ("Transcoder/Selection"). Ce circuit sert à transcoder le signal provenant des stations mobiles à travers les stations de base, signal qui correspond au codage de la parole, en code selon une loi dite loi A-loiµ, ou à transcoder le signal dans le sens inverse. Ce circuit sert également à sélectionner en diversité et à envoyer aux différentes cellules connectées le signal à émettre. Ce circuit T/S peut être juxtaposé au commutateur de service mobile MSC ou être disposé entre le sous-système radio BSS et le commutateur MSC. Cependant, la gestion de ce circuit relève de la station de base en service, dite BSmaitre (ou BSsource) par opposition aux stations de base dites BSesclave ou (BScible) . La distinction entre BSmaître et BSesclave est fondée sur le contrôle de ce circuit. On dit que la station de base est maître si elle a la propriété (ou la direction) de l'appel, ce qui signifie que la fonction de transcodage qui lui est rattachée est le point de contrôle de toutes les communications radio (donc du transfert automatique). L'appel reste la propriété de la BSmaître tant qu'au moins un de ses signaux pilotes reste dans l'ensemble actif. A un moment précis, la BSmaître essaiera de passer la propriété de l'appel à une cellule esclave dans une BSesclave choisie par la BSmaitre d'après les rapports de mesure et la liste des stations possibles indiquées par le mobile. Il peut être possible aussi à la BSmaître de commander un transfert automatique dur ou à la BSesclave de préférer un transfert automatique dur au transfert automatique souple demandé par la BSmaître.

S'agissant maintenant des interfaces du système CDMA IS-95, l'interface radioélectrique utilise une procédure CDMA, comme indiqué plus haut, et optionnellement l'interface dite A+ sépare le commutateur du service mobile MSC et la station de base BSS. Cette interface A est définie dans la norme IS-634. Cette interface comprend une couche 1, qui est une couche physique, des couches 2 et 3 dites MTP ("Message Transfer Part"), qui transportent la signalisation, et une couche 4 pour la partie contrôle de connexion SCCP ("Signaling Connection Control Part"). Une fonction BSAP ("Base Station Application Part") définit le protocole de signalisation de la couche d'application qui fournit les messages nécessaires à l'accomplissement des fonctions de l'interface MSC-BSS. Le protocole BSAP se divise en deux sous-applications : le BSMAP ("BS Management Application Part") et le DTAP ("Direct Transfer Application Part") :
- le BSMAP supporte toutes les procédure de gestion des ressources radio RRM ("Radio Ressource Management") et de gestion des installations FM ("Facility Management") entre le commutateur MSC et la station de base ou entre cellules d'une même station de base (cas d'un transfert intra-BSS) ; les messages de BSMAP ne sont pas envoyés au mobile ; ils ne servent qu'à réaliser des fonctions au niveau du commutateur MSC ou de la station de base ; un message BSMAP est aussi utilisé en parallèle avec un message DTAP afin d'établir une connexion entre la station de base et le mobile pour le bien du mobile, en réponse à un message de couche 3 envoyé par le mobile à la station de base à chaque besoin de celui-ci ;
- le message DTAP est utilisé pour véhiculer les messages de traitement d'appel CP ("Call Processing") et de gestion de la mobilité MM ("Mobility Management") entre le commutateur MSC et le mobile. La station n'utilise pas ce genre de message mais doit servir d'intermédiaire entre ces deux unités ; grâce à un système d'identité, le message DTAP connaît son destinataire.

La signalisation liée à un transfert automatique est donc uniquement composée de messages BSMAP puisqu'il s'agit de gérer une ressource radioélectrique (RRM).

S'agissant de l'opération de transfert automatique, il en existe de deux types : le transfert automatique intra-système et le transfert inter-système. Le transfert intra-système est un transfert entre deux cellules ou canaux radio appartenant à un même commutateur du service mobile MSC. Aucune coordination n'est alors nécessaire entre commutateurs pour supporter le déplacement du mobile d'une cellule à l'autre. Le transfert automatique intra-système est géré par des méthodes qui appartiennent au commutateur du service mobile MSC.

Le transfert automatique inter-système est un transfert automatique entre deux cellules appartenant à deux commutateurs du service mobile MSC différents. Ce type de transfert automatique nécessite une coordination liée au déplacement du mobile entre les cellules.

Trois sortes de gestion du transfert automatique peuvent être envisagées dans les réseaux mobiles :
- le transfert automatique contrôlé par le mobile,
- le transfert automatique contrôlé par le réseau,
- le transfert automatique assisté par le mobile.

Le transfert automatique assisté par le mobile ou MAHO ("Mobile Assisted Handoff") est la technique utilisée en CDMA IS-95. Il s'agit d'une variante du transfert automatique contrôlé par le réseau. En CDMA IS-95, le réseau n'effectue pas de mesure de puissance sur le lien montant. Il n'y a que le mobile qui les effectue sur le lien descendant.

A côté de ces deux systèmes GSM et CDMA IS-95 qui viennent d'être décrits, il existe des systèmes hybrides, que l'on peut dénommer CDMA/GSM, parce qu'ils empruntent à l'un et à l'autre des systèmes. Ainsi, le document WO 97/23108 décrit un système hybride où la transmission radioélectrique obéit à la technique CDMA propre au CDMA IS-95 mais où le réseau est conforme à la norme GSM.

L'objectif d'une telle combinaison est d'apporter aux systèmes GSM déjà existants l'avantage d'une interface radio plus efficace que celle du GSM. Par efficacité, on entend la capacité à permettre, dans une bande de fréquence donnée, un grand nombre de communications simultanées.

Le but de l'invention décrite dans le document WO 97/23108 est d'apporter une amélioration aux systèmes GSM déjà en opération ; en effet, il est expliqué dans ce document que, dans les régions où il n'y a pas encore de système cellulaire, il est certes plus efficace d'installer directement un système CDMA IS-95, mais que, pour les régions où le GSM est déjà déployé, il est plus intéressant de proposer une solution de compromis consistant à greffer une interface radio CDMA IS-95 au système GSM déjà existant. Il est alors nécessaire de prévoir un convertisseur de protocole intercalé entre l'interface A et l'interface radio.

Plus précisément, l'architecture du système décrit dans le document cité présente les caractéristiques suivantes :
(i) un commutateur du service mobile MSC de type GSM est relié à un contrôleur de station de base BSC de type GSM par l'interface A (il n'y a donc pas là de changement par rapport au GSM) ;
(ii) le contrôleur de station de base BSC de type GSM est relié aux stations de base BTS à travers un convertisseur de protocole (ceci diffère du GSM où le contrôleur de station de base BSC est relié directement aux stations de base BTS) ;
(iii) le convertisseur de protocole contrôle les sites radio, lesquels utilisent la transmission CDMA (ce convertisseur est spécifique de l'invention décrite dans le document) ;
(iv) la station mobile est adaptée à l'émission et à la réception en CDMA ; elle est adaptée également aux protocoles GSM pour les aspects service ; on peut l'appeler station mobile MS CDMA/GSM.

Les fonctions (ii) et (iii) peuvent être implantées dans la même machine. C'est en particulier le cas dans la réalisation présentée dans le document cité. Le commutateur du service mobile MSC GSM décrit dans le document cité est conforme aux recommandations ETSI.

Le principe de fonctionnement d'un tel système est alors le suivant :
a) les messages des procédures DTAP (dialogue direct entre le mobile et le commutateur du service mobile) sont emballés dans des messages conformes à la norme IS-95, et qui n'ont sur l'interface radio que ce rôle de transport ;
b)pour les autres procédures, en particulier celles qui nécessitent un dialogue entre le commutateur du service mobile et les autres entités, typiquement pour la mise en oeuvre de ressources radio, le convertisseur de protocole assure la traduction.

L'établissement d'un appel se déroule alors de la façon suivante :
i)les procédures de sécurité, les procédures de contrôle d'appel empruntent le mécanisme de transport (a) ;
ii)parmi les procédures de contrôle d'appel, le service est négocié entre la station mobile MS GSM/CDMA et le commutateur du service mobile MSC GSM, après l'accomplissement normal de cette négociation qui utilise le mécanisme (a) ; le commutateur du service mobile MSC GSM émet vers le contrôleur de station de base BSC GSM un message de requête d'acquittement ("Assignent Request") qui définit le type de canal radio à allouer ;
iii)cela nécessite la mise en oeuvre du mécanisme (b) : le contrôleur de station de base BSC GSM le transmet au convertisseur de protocole qui le traduit en une procédure compréhensible par un site radio CDMA; celui-ci effectue alors l'allocation de ressource radio suivant les principes du CDMA IS-95.

Deux éléments importants sont passés sous silence dans le document cité, à savoir les procédures en mode de veille et les procédures de localisation. Or, la définition de ces procédures, dans un tel contexte hybride, pose un problème de complexité comparable à celle de définir l'établissement d'appel dans ce contexte. En effet, pour les procédures de veille, il est nécessaire, comme pour l'établissement d'appel, de faire coexister des notions relevant de la norme IS-95 (en occurrence SID/NID et "Registration Zone") et les notions correspondantes du GSM (notamment les LAC).

Si l'invention décrite dans le document cité permet de reproduire un certain nombre de services et fonctions actuels du GSM, elle ne permet pas de conserver le caractère évolutif ni la modularité du GSM, car l'invention du document cité reprend l'organisation de l'interface radio IS-95 alors que les avantages du GSM sont obtenus grâce aux interfaces ouvertes et à la séparation des couches de protocoles sur l'interface radio.

On peut donner quelques exemples pratiques de l'utilité de ces principes :
- il est possible, en GSM, de faire évoluer la couche 2 (LAPDm) indépendamment des couches supérieures ; cela permettrait, par exemple, d'introduire une fenêtre de retransmission différente de 1; cela n'est pas possible en IS-95 et est donc impossible dans l'invention du document cité ;
- la couche 2 du GSM (LAPDm) comprend un mécanisme de segmentation, utile pour les messages longs que l'on peut être amené à utiliser pour certains services supplémentaires ou pour certains services de données ; or, l'invention du document cité reprend la couche 2 de la norme IS-95, couche qui ne comprend pas de mécanisme de segmentation ; pour cette raison l'introduction de ces évolutions de service est rendue plus difficile dans l'invention du document cité ;
- l'interface Abis du GSM n'est pas utilisée dans l'invention du document cité ; or, cette interface permet certaines évolutions à moindre coût ; par exemple le service de données haut débit du GSM (HSCSD) ne nécessite pas de changement dans les stations de base BTS parce qu'il réutilise des protocoles déjà existants entre contrôleur BSC et station BTS.

Plus généralement, les principes relatifs au réseau et aux protocoles du GSM ont permis de bâtir des protocoles applicatifs sur des protocoles déjà existants tels que MTP, SCCP, LAPD, ce qui a permis des développements plus rapides et moins coûteux.

Ces principes ont également permis de définir des interfaces à la fois ouvertes et évolutives : il est possible, dans la réalité, de faire fonctionner tout module d'identification d'abonné SIM dans tout équipement mobile GSM, tout mobile GSM dans tout réseau GSM et de faire interfonctionner tout réseau GSM avec tout autre réseau GSM. De même, l'interfonctionnement à l'interface A entre équipements radio BSS et équipements réseau NSS d'origines différentes a été assurée. Ces principes de protocole permettent de préserver ces comptabilités quand de nouveaux services sont introduits, dans certaines régions seulement d'un réseau, quand certains réseaux implantent de nouveaux services et d'autres non ; de même, des équipements mis à niveau peuvent interfonctionner avec des équipements non encore mis à niveau. Dans ce dernier cas, les protocoles permettent des replis sur un ensemble minimum de services.

L'invention décrite dans le document cité ne conservant pas l'ensemble des principes relatifs aux protocoles et aux réseaux du GSM, particulièrement à l'interface radio, elle ne garantit pas la conservation de ces avantages. Il est donc utile de définir un système de télécommunications avec les mobiles qui réunisse les avantages suivants :
- l'efficacité spectrale de la transmission CDMA, c'est-à-dire sa capacité à établir, dans une bande de fréquence donnée, un grand nombre de communications simultanées ;
- l'efficacité des principes du réseau du GSM, ce qui comprend, notamment, l'ouverture des interfaces, la gestion de la mobilité, l'évolutivité des protocoles permettant l'évolutivité des services.

C'est le but de la présente invention.

Il est à noter qu'un tel but est différent de celui visé par l'invention du document cité, lequel est d'apporter une amélioration à un système déjà existant (et donc d'interfonctionner avec certains éléments de tels systèmes) alors que le but de la présente invention est de proposer les principes d'un système nouveau qui prendrait des avantages dans les deux mondes cellulaires.

### Exposé de l'invention

Dans la présente invention, l'architecture propre au GSM et la répartition fonctionnelle du GSM sont conservées ainsi que les couches de protocoles tant à l'interface radio qu'à l'interface A. Ainsi, les avantages du GSM sont-ils conservés sans qu'on introduise les inconvénients de l'art antérieur.

L'apport se situe essentiellement dans les procédures d'interface radio, qui sont réécrites de façon à spécifier, dans le cadre général du GSM, une transmission radio CDMA ; plus précisément :
- la couche 1 du protocole est entièrement modifiée par rapport au GSM puisqu'il s'agit d'établir une transmission CDMA ; la réalisation préférée pourra utiliser la transmission spécifiée par la norme IS-95 mais d'autres formes de CDMA peuvent aussi être utilisées ;
- la couche 2 est celle du GSM ;
- la couche 3 conserve la structure générale propre au GSM avec sa division en trois sous-couches (RR, MM, CM).

De façon plus précise, la présente invention a pour objet un procédé de communication avec des mobiles, de type hybride CDMA/GSM, dans lequel on utilise, d'une part, des sous-systèmes radio comprenant notamment des stations de base assurant une couverture radioélectrique et des sous-systèmes réseau reliés à un réseau téléphonique et comprenant notamment un commutateur du service mobile, ces deux sous-systèmes communiquant entre eux à travers une interface dite H, et, d'autre part, des stations mobiles communiquant avec les stations de base à travers une interface radioélectrique, des protocoles étant en outre prévus pour faire coopérer ces sous-systèmes, procédé dans lequel on établit, entre les stations mobiles et les stations de base, une transmission radioélectrique selon la technique d'accès multiple à répartition dans les codes, les sous-systèmes réseau fonctionnant selon les principes définis par la norme GSM,
ce procédé étant caractérisé par le fait que lesdits protocoles sont organisés en couches selon l'organisation générale définie par la norme GSM, y compris à l'interface radioélectrique, une première couche spécifiant la transmission CDMA à l'interface radioélectrique et d'autre couches à l'interface radioélectrique spécifiant d'autres fonctions.

L'architecture de l'interface radio comprend une couche 2 (dite "couche de transport" dans le modèle ISO), permettant le transport fiable des messages des couches supérieures au moyen d'encapsulation de ces messages dans des trames, avec éventuellement segmentation/réassemblage, et de mécanismes de numérotation de ces trames avec acquittements et retransmissions, notamment sur expiration de temporisation.

De préférence encore, les protocoles comprennent une troisième couche spécifiant notamment les procédures d'établissement, de maintien et de libération des moyens utilisés pour une transmission.

La troisième couche est de préférence divisée en types de protocoles et comprend trois sous-couches relatives à trois protocoles différents :
i) une première sous-couche spécifie notamment le chiffrement, la recherche de mobiles, l'allocation de canal, les activités en mode de veille et le transfert automatique ; cette sous-couche est similaire à la sous-couche RR du GSM mais elle comprend les adaptations nécessaires au contexte radio CDMA. Comme dans le GSM, le chiffrement s'applique au niveau 1 (ou niveau physique) : les trames de niveau 1 non cryptées sont modifiées par des suites d'éléments chiffrants issus d'un algorithme de chiffrement. A l'interface radio, les messages de recherche des mobiles sont physiquement émis en utilisant les principes de la norme IS-95 : on utilisera aussi bien le mode général que le mode à fenêtre dit "slotté". A l'interface H, la recherche des mobiles utilise les principes du GSM : les messages de recherche seront émis par le MSC vers le système radio en utilisant les principes des LAC du GSM. Les procédures en mode de veille comprennent les émissions de messages permettant l'accès au système, la sélection initiale de cellule, la resélection de cellule et la décision de mise à jour de localisation. Le réseau diffuse des messages permettant l'accès au système, ces messages ayant une fonction similaire à celle des messages SYSTEM INFORMATION spécifiés dans la norme GSM 04.08 ; néanmoins leur contenu est adapté au contexte radio CDMA ; par exemple le nombre de canaux d'appel, le décalage PN des pilotes voisins reflète ce contexte CDMA. En revanche, le contenu de ces messages est similaire au GSM pour les aspects liés à la localisation, par exemple l'identité de la zone de localisation. La sélection/resélection de cellule et le déclenchement de la mise à jour de localisation sont similaires aux procédures correspondantes de la norme GSM. Les procédures de transfert automatique comprennent la remontée de mesures par la station mobile, la décision de transfert par le réseau et son exécution comme spécifié plus bas ;
ii) une deuxième sous-couche spécifie notamment les procédures de localisation des stations mobiles, l'identification des stations mobiles et l'authentification d'une identité annoncée par un mobile, selon la norme GSM ;
iii)une troisième sous-couche comprend trois entités parallèles : le contrôle d'appel qui spécifie notamment les procédures d'établissement et de relâche d'appel entre une station mobile et un abonné du réseau, les services supplémentaires et le service de messages courts. Ces trois entités sont similaires à celle du GSM. Le contrôle d'appel est légèrement modifié afin que l'élément d'information de capacité support ("bearer capabilities") prenne en compte l'évolution du support physique.

En conséquence, les divers équipements du GSM sont conservés mais subissent des adaptations :
- le commutateur du service mobile évolue légèrement, notamment certains éléments de signalisation des procédures BSSMAP évoluent pour décrire l'allocation de ressources radio CDMA ;
- le contrôleur de station de base évolue pour prendre en compte les évolutions de l'allocation de ressources radio CDMA et transfert automatique doux ;
- la station de base comprend des moyens adaptés à la technique CDMA ;
- la station mobile comprend des moyens adaptés à la technique CDMA.

### Brève description des dessins

- la figure 1, déjà décrite, décrit les moyens essentiels d'un système GSM ou CDMA ou d'un système hybride CDMA/GSM ;
- la figure 2 montre la répartition des cellules dans l'invention ;
- la figure 3 illustre une station de base à trois secteurs ;
- la figure 4 illustre la diversité ;
- la figure 5 illustre la gestion du mode diversité ;
- la figure 6 illustre les allocations de code de localisation.

### Exposé détaillé de modes de réalisation

Le mode de réalisation préféré de l'invention est fondé sur une modification des messages propres aux normes IS-95 et GSM : les messages de la norme IS-95 sont adaptés en un langage GSM et de nouveaux messages sont créés en cas de besoin. Il en est de même des messages d'interface H, fondamentalement écrits en mode GSM, mais qui sont adaptés au mode de transmission CDMA, et qui sont éventuellement créés en cas de besoin.

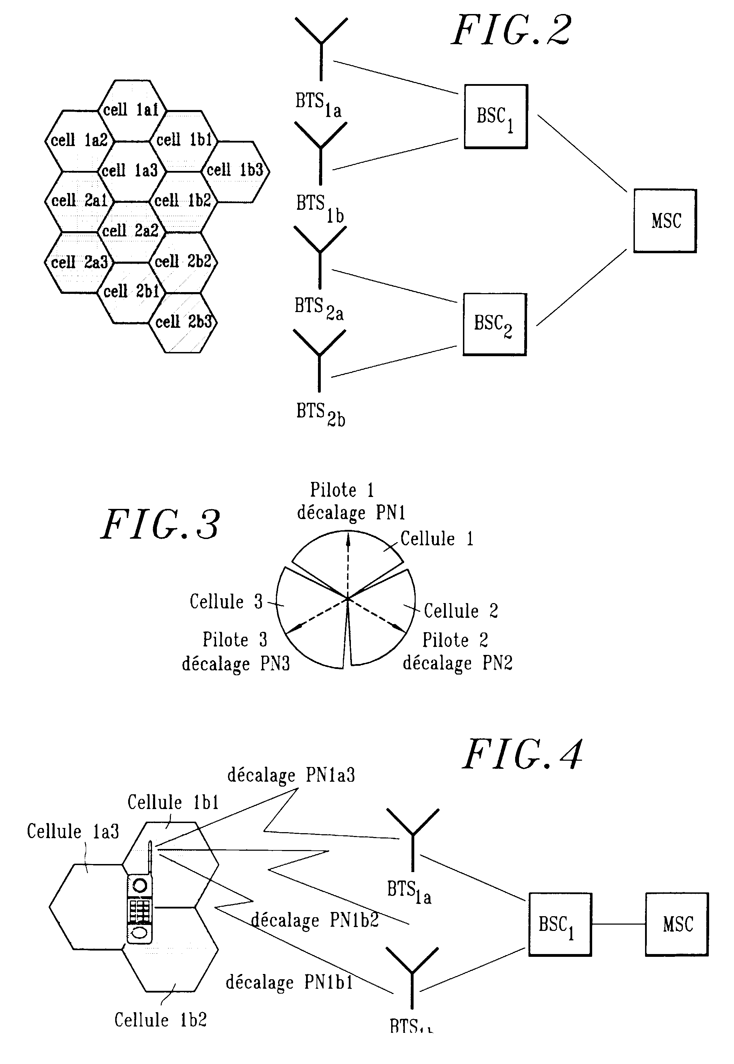

L'architecture souhaitée du réseau vise à être, dans la mesure du possible, semblable à celle d'un pur réseau mobile GSM, mais avec une affectation différente des fonctionnalités en raison de la spécificité du CDMA. Ce réseau est illustré sur la figure 2. On y voit deux contrôleurs de station de base BSC₁, BSC₂ contrôlant chacun deux stations de base, respectivement BTS₁ₐ, BTS_{1b} et BTS₂ₐ, BTS_{2b}.

Une cellule ("cell") est identifiée par une paire unique de codes : d'une part un code de zone de localisation, soit LAC, et un identificateur de cellule, soit CI. Du point de vue radioélectrique, une cellule est caractérisée par le décalage du signal pilote. Une station de base à plusieurs secteurs doit gérer une cellule par secteur, avec un pilote différent (décalage PN) pour chaque cellule comme illustré sur la figure 3. Une cellule 1 est liée à un décalage PN1 du pilote 1, une cellule 2 à un décalage PN2, etc...

La connexion d'un mobile au réseau, dans un système CDMA, peut être effectuée par un procédé de macro-diversité : sur l'interface radio, il existe plusieurs liaisons radio entre la station mobile et le réseau d'accès. Chaque liaison entre la station mobile et le réseau utilise un décalage PN particulier. La figure 4 représente le cas du mode diversité pour des stations de base BTS₁ₐ, BTS_{1b} connectées à un même contrôleur de station de base BSC₁.

Dans la réalisation préférée de l'invention, les spécifications fonctionnelles de base suivantes sont satisfaites :
- une couche 2 conforme aux principes du HDLC est définie à partir du LAPDm utilisé dans le GSM ; ceci permet des procédures de segmentation et réassemblage, l'utilisation de plusieurs SAPI, etc...
- une gestion séparée des protocoles spécifiques aux gestions de ressources radio, à l'établissement d'appel et à la mobilité ;
- les messages de niveau 3 sont définis de la façon suivante :
   - répartition des messages et des éléments d'information par procédure élémentaire, et par conséquent, par couche RR, MM ou CM ;
   - identifiant de protocole (en fait, identifiant de la couche RR, MM ou CM à laquelle appartient le message), identifiant du message ;
   - éléments d'information des messages : ils peuvent être repris de la norme IS-95.

La réalisation préférée de l'invention ne spécifie pas le codage des éléments d'information. En effet, le codage modifié des messages peut se faire de deux façons : remplir les bits des éléments d'information supprimés par des intervalles vides ("spare") afin de qarder une compatibilité ascendante avec les matériels CDMA déjà existants, ou redéfinir totalement le codage des messages.

Les canaux communs (accès et diffusion) ne sont utilisés que pour une demande de ressource (accès), une affectation des canaux dédiés et pour la diffusion des informations sur le réseau nécessaire au mobile en mode veille.

Les identités des mobiles sont identiques à celles qu'utilise le GSM : IMSI, TMSI, IMEI. Le mécanisme d'authentification est le même que celui qu'utilise le GSM. Le mécanisme de secret est également celui du GSM : cryptage des trames au niveau de la transmission. L'algorithme de cryptage doit être défini en liaison avec la modulation CDMA.

Comme expliqué précédemment, en mode diversité, le mobile utilise des canaux de trafic avec plusieurs cellules. En fait, la macro-diversité est utilisée pour les procédures de transfert automatique souples ("soft") et très souples ("softer") . Dans ces procédures, le réseau spécifie au mobile quels sont les canaux de trafic qu'il doit maintenir actifs, quels sont ceux qu'il doit désactiver et quels nouveaux canaux il doit activer. La différence entre ces procédures est la suivante ;
- un transfert automatique est dit "très souple" quand le mode diversité est appliqué entre deux secteurs de la même station de base ;
- un transfert automatique est dit "souple" quand le mode diversité est appliqué entre deux stations de base différentes.

Pour le transfert automatique souple et très souple, le mobile utilise la même fréquence.

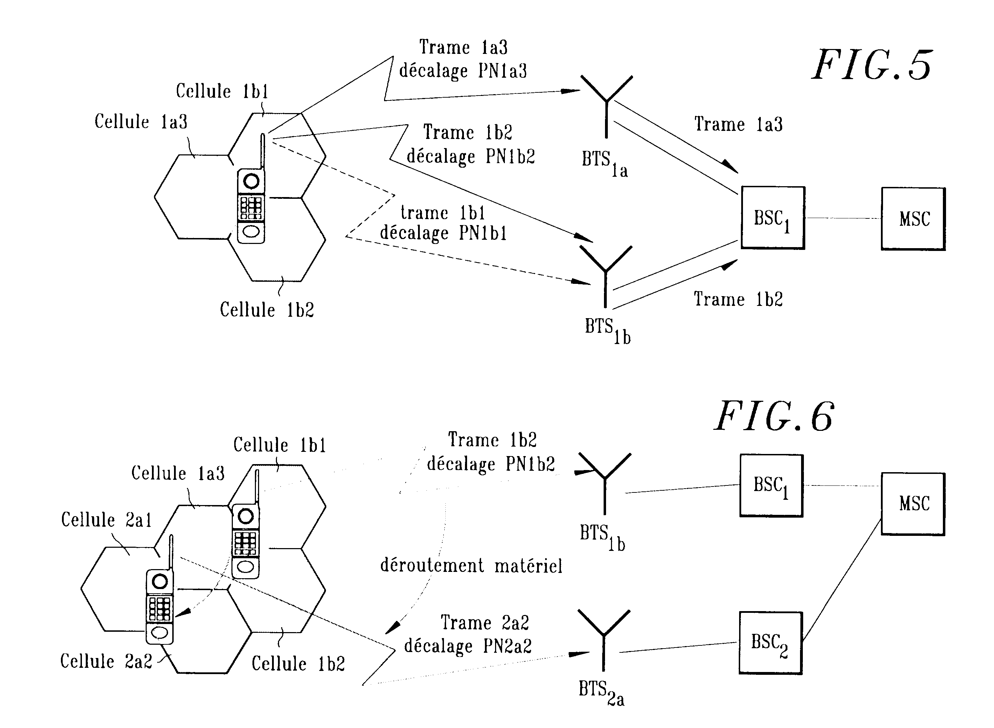

En mode diversité, le mobile envoie les mêmes trames sur chaque liaison. Du côté réseau, les trames reçues sont traitées et le réseau décide laquelle possède la meilleure qualité du point de vue du niveau, du taux d'erreurs, etc. Le choix de ces trames s'effectue conformément à l'état de la technique décrit plus haut. La figure 5 représente le mode diversité dans le cas d'un transfert automatique souple et très souple dans un cas où la transmission avec le secteur lbl est plus mauvaise qu'avec d'autres secteurs (la3, lb2).

En mode diversité, le mobile est vu par plusieurs cellules, ceci pourrait poser problème lors des mises à jour de localisation. Pour pallier à cet inconvénient, les deux règles suivantes sont introduites :
- le mode diversité est inhibé jusqu'à l'établissement du niveau 2 sur l'interface radio ;
- lors d'une mise à jour de localisation, la cellule qui détermine la localisation est celle vers laquelle le mobile a émis la première demande de canal dédié.

Après la fin d'une communication pendant laquelle des transferts automatiques intercellulaires sont intervenus avec changement de code LAC, le mobile doit exécuter une procédure de mise à jour de localisation telle que définie dans les spécifications de la norme GSM.

L'interface radio va maintenant être décrite avec tout d'abord un exposé du principe de la surveillance des messages d'information.

Deux stratégies sont possibles pour que le mobile surveille les messages d'information du système sur le canal recherche. Ces messages contiennent des informations générales au sujet de la configuration du réseau et des liaisons radio. Dans la norme GSM, ces messages sont appelés "messages d'information système".

Dans la norme GSM, le mobile doit périodiquement surveiller tous les messages d'information système, analyser la totalité de leur contenu au moins toutes les 20 à 30 secondes. Cette méthode permet au mobile d'économiser de l'énergie. Le principal inconvénient de cette stratégie est d'obliger le mobile à analyser les messages d'information système même si leur contenu reste inchangé.

Dans le système CDMA IS-95, les messages d'information système ont un numéro séquentiel. Chaque fois qu'une valeur de paramètre varie, le numéro de séquence du message est incrémenté. Il suffit au mobile d'analyser le numéro de séquence du message pour savoir si des paramètres ont été modifiés ou non. Ce procédé a l'avantage de dispenser le mobile de l'analyse de tout les messages d'information système lorsqu'il n'y a pas de changement. L'inconvénient tient à ce que le mobile et le réseau doivent gérer des paramètres supplémentaires (les numéros séquentiels de message). Les deux stratégies présentent des avantages et des inconvénients.

La réalisation préférée de l'invention propose une combinaison de ces deux méthodes : périodiquement, le mobile analyse le numéro de séquence des messages d'information système et, si la valeur a changé, analyse tout le contenu du message.

Le code de masque long contribue de façon essentielle à caractériser tant la partie montante que la partie descendante du canal de trafic alloué au mobile. En mode standard (le mode secret non activé), cette valeur est une permutation du numéro électronique de série ESN. Le code de masque long, calculé à partir du numéro électronique de série, est dit code de masque long public (la valeur ESN est plus ou moins publique). Avec les identités de la norme GSM, l'emploi du numéro électronique de série pour le code de masque long n'est plus possible. Une autre manière de calculer le code de masque long doit être utilisée.

Toute méthode de calcul doit respecter les deux contraintes suivantes :
- la longueur du code de masque long est de 42 bits, dont 10 bits de valeur fixe pour tout le réseau,
- les 32 bits restants caractérisent le mobile dans la(les) cellule(s) avec laquelle (lesquelles), il a un lien actif.

Certaines procédures de la norme IS-95 exigent une répartition uniforme des stations mobiles parmi N ressources. Ces types de ressource sont le numéro de canal CDMA, le numéro de canal de recherche, le numéro de créneau de recherche et la procédure aléatoire d'accès au pilote PN de canal.

Une fonction de hachage ("hash") produit un entier en utilisant comme arguments l'identité internationale de l'abonné mobile ou le numéro électronique de série de la station mobile, le nombre des ressources N et un modificateur DECORR. Ce modificateur DECORR est également basé sur l'identité d'abonné mobile ou le numéro électronique de série de la station mobile. Pour chaque type de ressource, la procédure de la fonction doit être vérifiée et éventuellement modifiée pour être adaptée aux identités des stations mobiles dans la norme GSM et au principe de la norme GSM concernant la confidentialité de l'identité internationale d'abonné mobile.

Certaines procédures radio exigent une synchronisation entre la station mobile et la station de base. Ces procédures sont le transfert automatique, le cryptage, etc... Le système CDMA IS-95 gère ce besoin de synchronisation par le "temps d'action" : dans les messages concernant ces procédures qui sont envoyées à la station mobile, le réseau indique le temps d'action auquel la station mobile doit démarrer la nouvelle procédure radio.

Le système GSM gère ce besoin de synchronisation grâce aux mécanismes de la couche 2.

Ces deux méthodes sont équivalentes. Elles peuvent être combinées.

Le procédé selon l'invention peut être mis en oeuvre par une installation comme celle de la figure 1, avec quelques modification dans les fonctions remplies par les différents moyens. Ces fonctions peuvent être passées en revue :

### Fonctions des stations de base (BTS)

Le mode diversité implique que les trames transmises à l'interface radio entre le mobile et le réseau soient toutes identiques pour chaque liaison. Le démultiplexage des trames est effectué dans le transcodeur/sélectionneur de la station de base maître. Aucune signalisation liée au traitement des communications mobiles n'est effectuée dans la station de base.

### Fonctions du contrôleur de station de base (BSC)

Les fonctions du contrôleur de station de base (BSC) sont décrites ci-dessous. Pour une connexion donnée, l'ordre de déclenchement du chiffrement et la clé de chiffrement pour cette connexion sont transmis du MSC au BSC ; celui-ci transmet au mobile l'ordre de chiffrement ; il le transmet également à la (aux) BTS impliquée(s) dans cette connexion, il lui (leur) transmet de plus la clé de chiffrement.

L'ordre de recherche d'un mobile, émis par le MSC, est reçu par le BSC ; celui-ci le transmet alors vers les BTS qu'il contrôle et qui font partie de la zone de localisation indiquée par le MSC.

Les ressources radio sont gérées par le BSC : à la réception d'une demande de canal émise par un mobile, le BSC alloue un canal dédié en mode signalisation seulement au mobile, pour cela il choisit une ressource radio parmi celles de la BTS qui a relayé cette demande de canal, la fait activer par cette BTS et lui fait transmettre l'allocation à destination du mobile demandeur. Quand une ressource radio de signalisation est allouée au mobile, le MSC peut donner l'ordre au BSC de modifier cette ressource pour permettre l'écoulement de trafic (par exemple voix ou données). Pour cela, le MSC transmet au BSC le message "demande d'allocation" ; le BSC donne alors l'ordre à la station mobile et à la (aux) BTS impliquée(s) dans cette connexion de changer les caractéristiques du(des) canal(canaux) .

En vue du transfert automatique, le BSC maître reçoit et analyse les mesures radio transmises par la station mobile. Par BSC maître, on entend le BSC contrôlant la cellule maître.

On distinguera le cas où toutes les cellules impliquées sont gérées par le même BSC de celui où plusieurs BSC sont impliqués.

Dans le premier cas, le BSC maître décide du passage d'un pilote de l'ensemble des "candidats" à l'ensemble des "actifs", il décide également du passage d'un pilote de l'ensemble des "actifs" à l'ensemble des "voisins" ; il transmet les ordres correspondants au mobile et aux BTS concernées.

Dans le deuxième cas, le BSC maître prend les mêmes décisions concernant l'évolution des ensembles des pilotes ; pour les cellules qu'il ne contrôle pas il faut transmettre les ordres correspondants via le(s) MSC nécessaire(s), après négociation avec le(s) MSC esclave(s) concerné(s).

### Fonctions du commutateur du service mobile (MSC)

Le commutateur du service mobile MSC a les mêmes fonctions que dans la norme GSM :
- il gère l'établissement et la relâche des communications entre les abonnés mobiles et d'autres abonnés fixes ou mobiles, avec toutes les fonctions d'un commutateur numérique ;
- il gère les procédures de mobilité du mobile en utilisant des bases de données du type VLR-HLR du GSM ; un protocole similaire au MAP pourra être utilisé ;
- il vérifie les procédures de sécurité ;
- il négocie le service avec le mobile ;
- il ordonne l'allocation d'une ressource de trafic.

Il gère le transfert automatique inter-contrôleur de station de base (transfert automatique pur).

Dans ces conditions, les échanges de messages entre ces divers moyens sont les suivants :

Pour la mise à jour de localisation , on a les étapes suivantes :
A- Le mobile, sur le canal d'accès, envoie un message de demande de canal avec la cause : "mise à jour de localisation".
B- Le sous-système radio attribue un canal dédié de trafic CDMA au mobile, mais uniquement pour la signalisation : débit binaire minimal, tous les bits de trame étant réservés à la signalisation.
C- Le mobile met en service le canal dédié alloué et envoie au sous-système radio la trame SABM de couche 2 contenant le message initial de demande de mise à jour de localisation.
D-Le sous-système radio établit, comme dans un modèle de communication en norme GSM, une connexion SCCP avec le commutateur du service mobile et envoie le message de demande de mise à jour de localisation.
E-La suite de la procédure de mise à jour àe localisation est traitée selon les spécifications définies dans la norme GSM.

On a ainsi les échanges suivants :

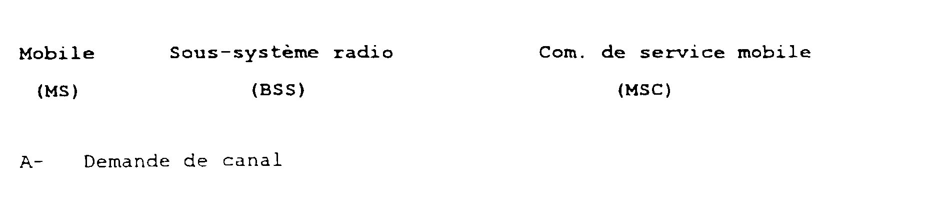

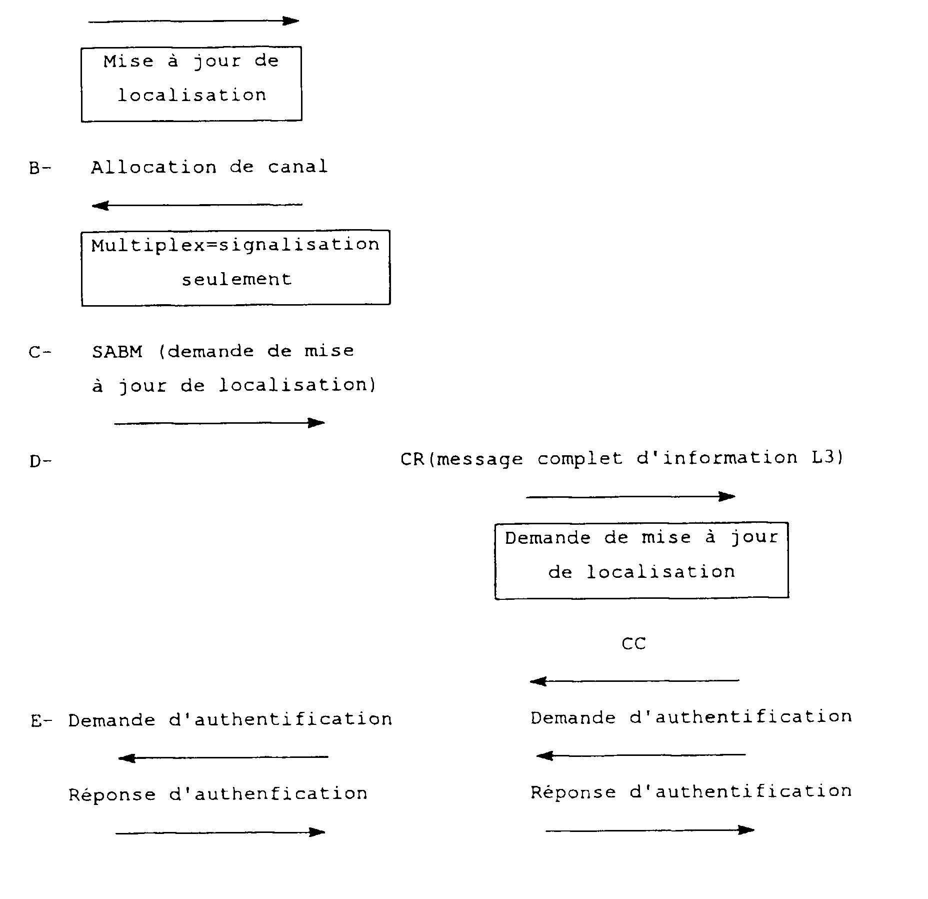

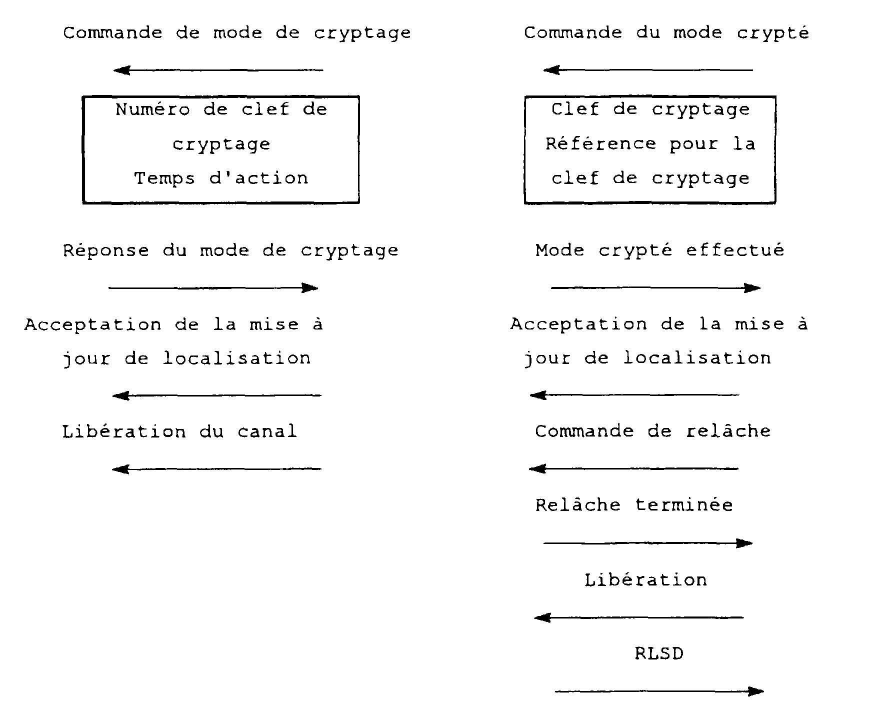

Pour un appel venant d'un mobile, on a les étapes suivantes ;
A- Le mobile, sur le canal d'accès, envoie un message de demande de canal avec la cause "demande de service CM".
B- Le sous-système radio affecte un canal dédié CDMA au mobile, mais uniquement pour la signalisation : débit binaire minimal, tous les bits de trame sont réservés à la signalisation.
C- Le mobile commute sur le canal alloué en service et envoie au sous-système radio la trame SABM de couche 2 contenant ce message initial de demande de service CM.
D- Le sous-système radio établit, comme dans le modèle de communication en norme GSM, une connexion SCCP avec le commutateur de service mobile et envoie le message de demande de service CM.
E- La suite des procédures MM et CM entre mobile et MSC est traitée selon les spécifications définies dans la norme GSM.
F- Après négociation du service entre le mobile et le commutateur de service mobile (message "setup") le commutateur de service mobile ordonne au sous-système radio de configurer ce canal dédié en mode trafic conformément au service négocié.
G- Le sous-système radio donne au mobile l'ordre de commuter en mode trafic.
H- La suite de l'établissement de la communication, de l'échange de trafic et de libération de la communication, sont traités selon les spécifications définies dans la norme GSM.

On a ainsi les échanges suivants :

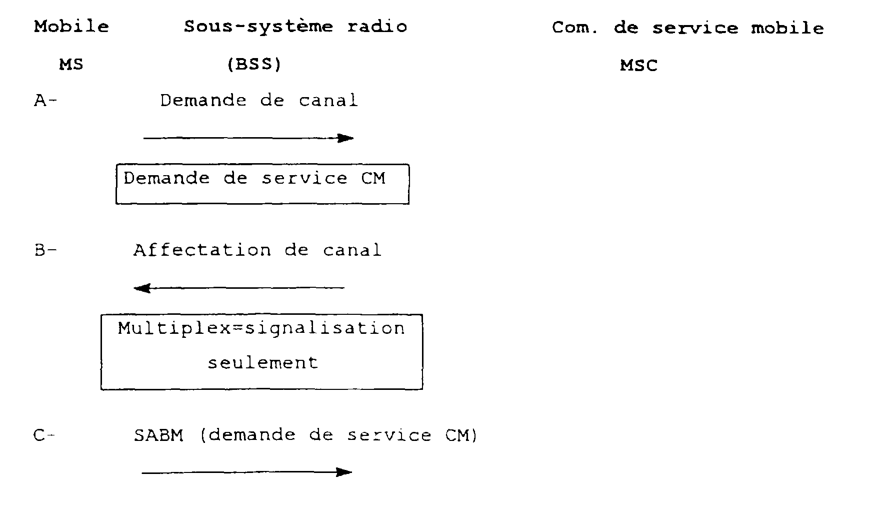

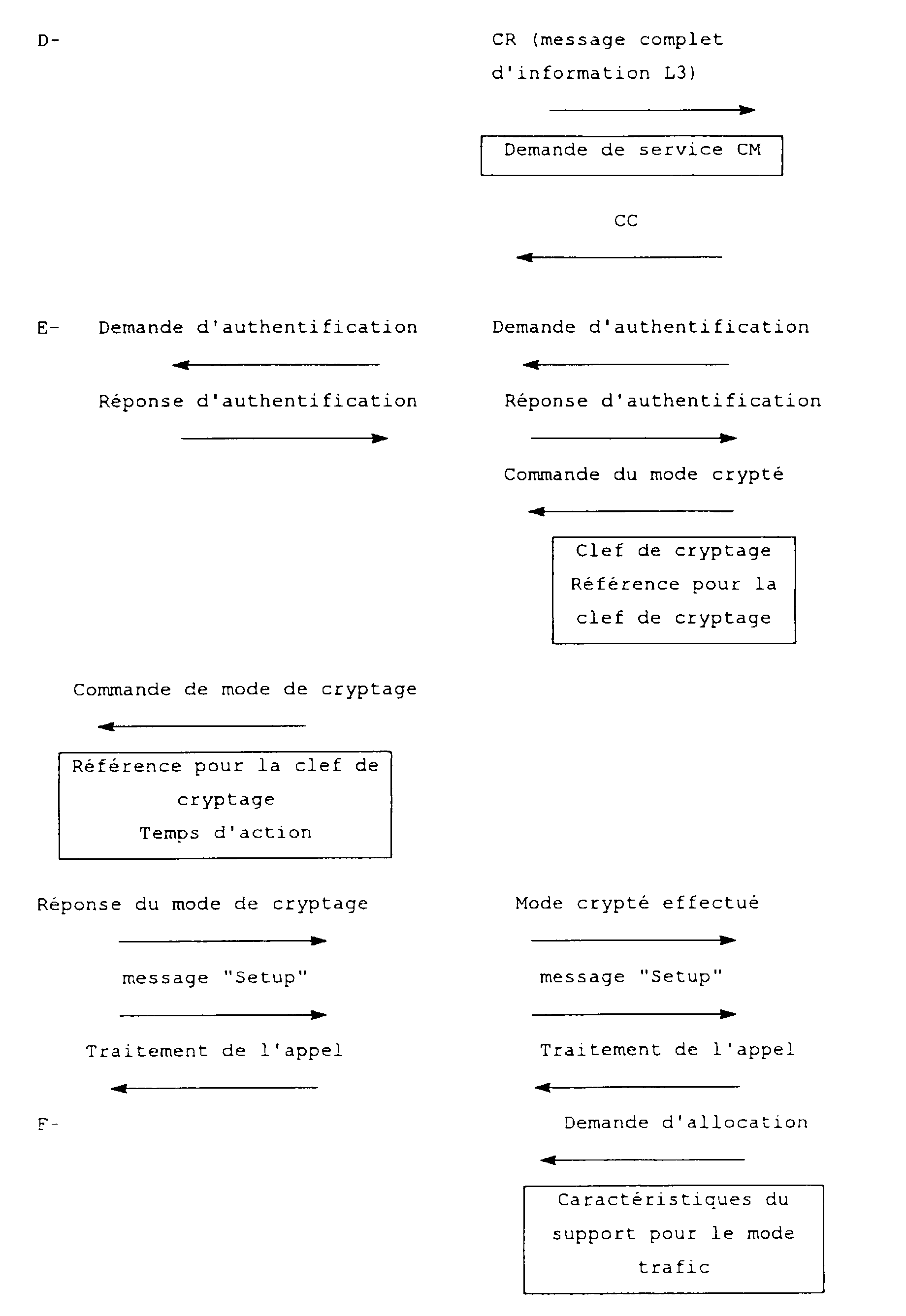

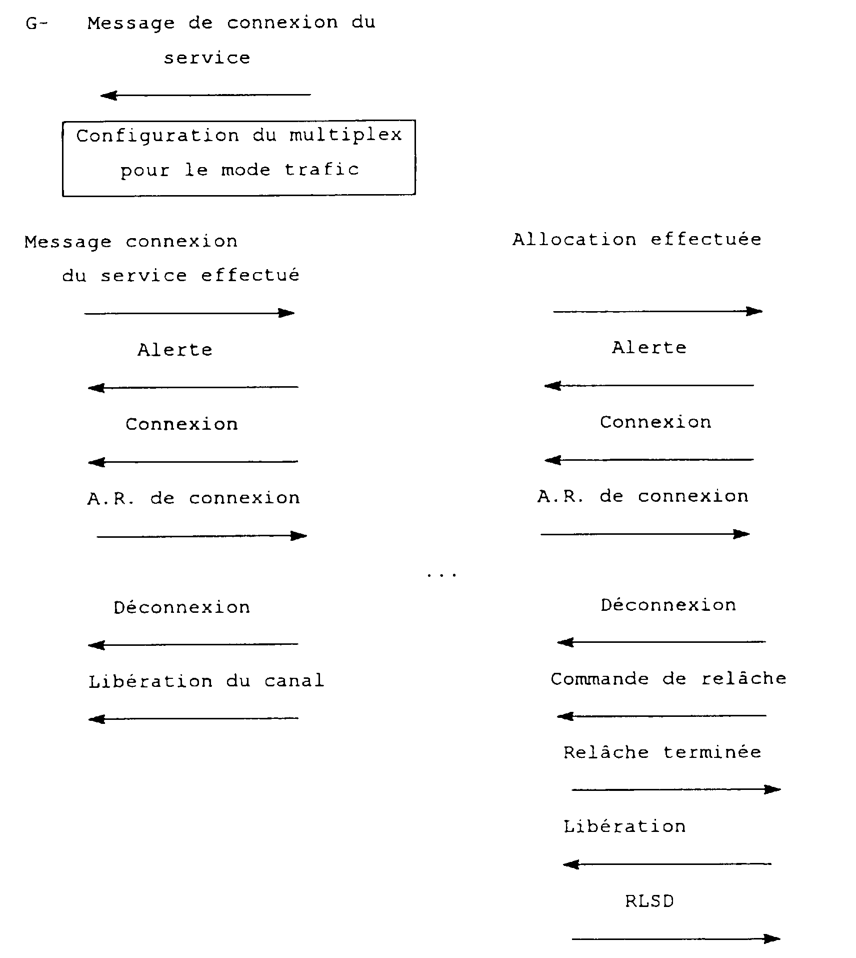

Pour un appel vers un mobile, on a les étapes suivantes :
A- Le réseau recherche le mobile.
B- Le mobile, sur le canal d'accès, envoie un message de demande de canal avec la cause "réponse à une recherche".
C- Le sous-système radio affecte un canal CDMA au mobile, mais uniquement pour la signalisation : débit binaire minimal, tous les bits de trame réservés pour la signalisation.
D- Le mobile commute sur le canal alloué et envoie au sous-système radio la trame SABM de couche 2 contenant le message initial "réponse à une recherche".
E- Le sous-système radio établit, comme dans le modèle de communication en norme GSM, une connexion SCCP avec le commutateur de service mobile et envoie le message "réponse à une recherche".
F- La suite des procédures MM et CM est conforme aux spécifications définies dans la norme GSM.
G- Après la négociation du service entre le mobile et le commutateur de service mobile (message "setup"), le commutateur de service mobile donne au sous-système radio l'ordre de configurer le canal alloué en mode trafic.
H- Le sous-système radio ordonne au mobile de commuter en mode trafic.
I- La suite de l'établissement de la communication, l'échange de trafic, et la libération de la communication sont traités selon les spécifications définies dans la norme GSM.

On a ainsi les échanges suivants :

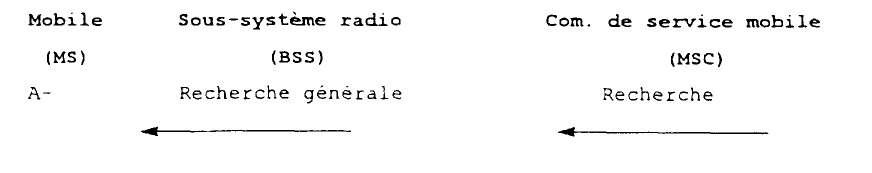

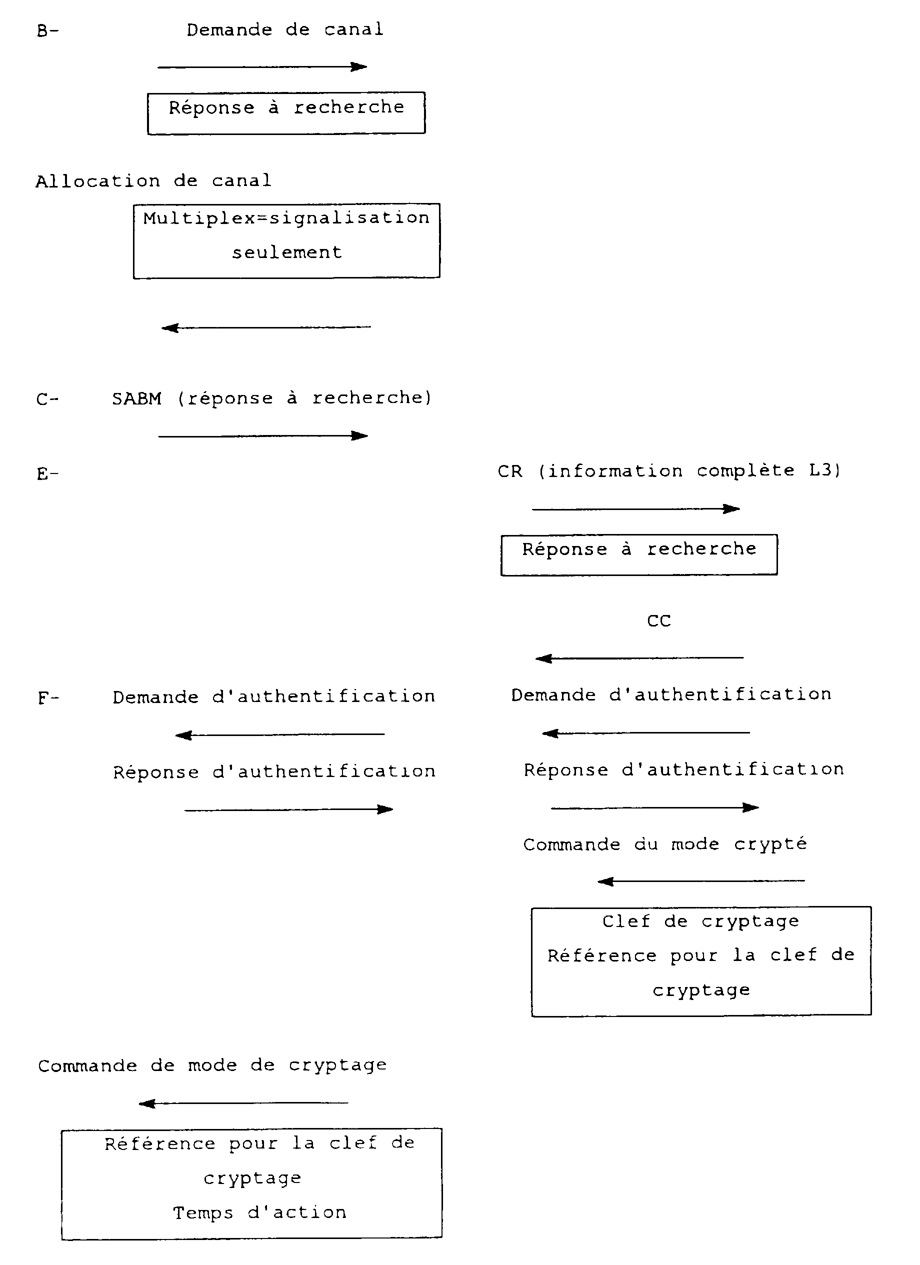

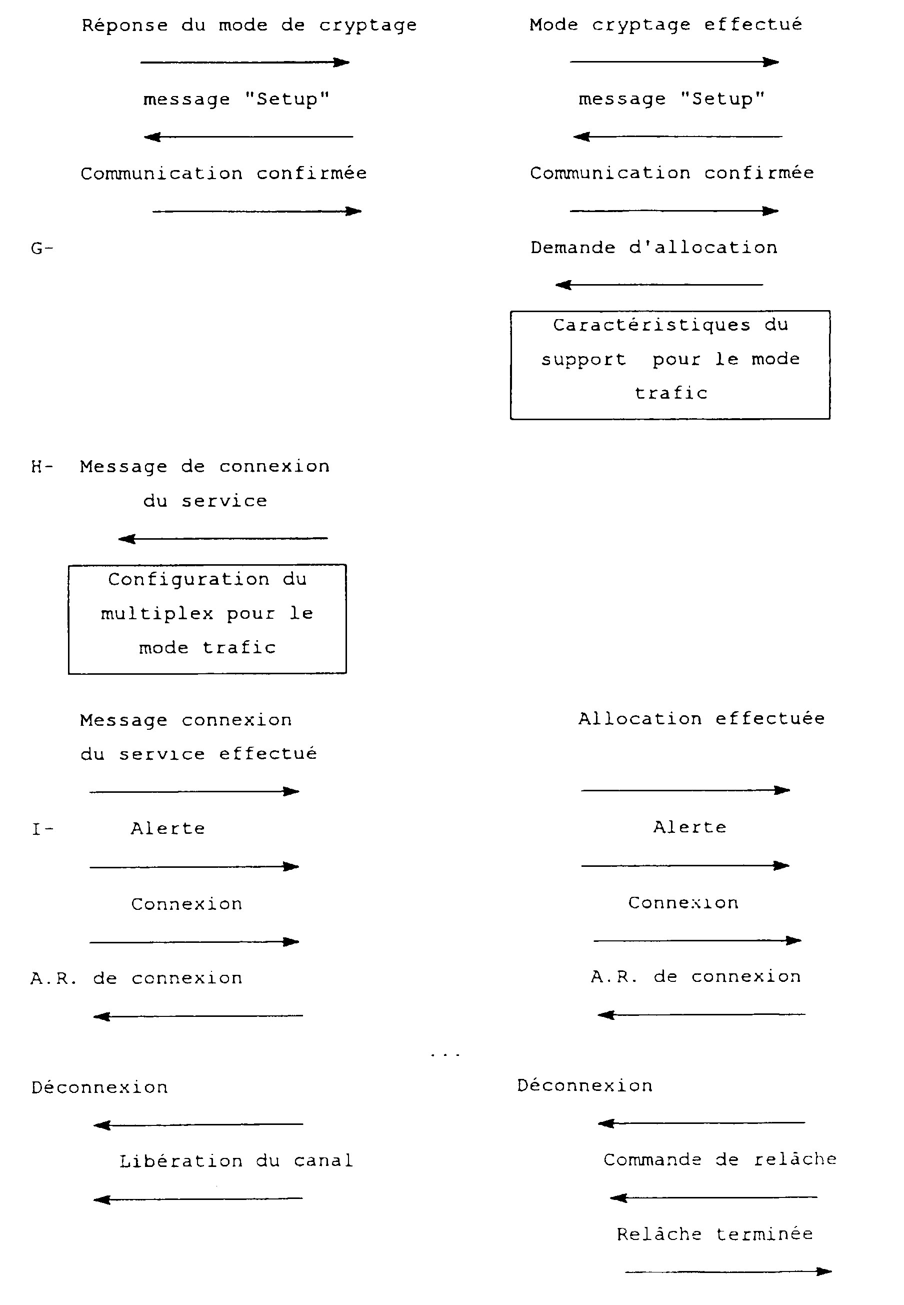

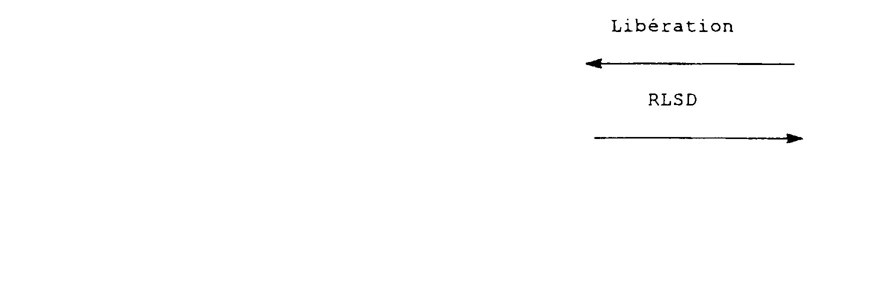

## Revendications

1. Procédé de communication avec des mobiles, de type hybride CDMA/GSM, dans lequel on utilise, d'une part, des sous-systèmes radio (BSS) comprenant notamment des stations de base (BTS) assurant une couverture radioélectrique et des sous-systèmes réseau (NSS) reliés à un réseau téléphonique (RTCP) et comprenant notamment un commutateur du service mobile (MSC), ces deux sous-systèmes communiquant entre eux à travers une interface dite H, et, d'autre part, des stations mobiles (MS) communiquant avec les stations de base (BTS) à travers une interface radioélectrique, des protocoles étant en outre prévus pour faire coopérer ces sous-systèmes, procédé dans lequel on établit, entre les stations mobiles (MS) et les stations de base (BTS), une transmission radioélectrique selon la technique d'accès multiple à répartition dans les codes (CDMA), les sous-systèmes réseau fonctionnant selon les principes définis par la norme GSM,
ce procédé étant caractérisé par le fait que lesdits protocoles sont organisés en couches selon l'organisation générale définie par la norme GSM, y compris à l'interface radioélectrique, une première couche spécifiant la transmission CDMA à l'interface radioélectrique et d'autres couches à l'interface radioélectrique spécifiant d'autres fonctions.

2. Procédé selon la revendication 1, dans lequel les protocoles d'interface radioélectrique comprennent une deuxième couche dont les fonctions sont celles de la couche transport définie dans le modèle de l'ISO.

3. Procédé selon la revendication 2, dans lequel l'architecture de l'interface radio comprend une troisième couche subdivisée en trois sous-couches, la troisième sous-couche étant elle-même constituée de plusieurs entités parallèles l'une de ces entités spécifiant les procédures d'établissement de maintien et de libération de moyens utilisés pour une connexion entre un abonné mobile et un autre abonné à un réseau de télécommunications, une autre entité spécifiant un service de messages courts, une autre encore spécifiant des services supplémentaires.

4. Procédé selon la revendication 2, dans lequel les protocoles de l'interface radioélectrique comprennent une troisième couche spécifiant notamment les procédures d'établissement, de maintien et de libération des moyens utilisés pour une connexion entre un abonné mobile et un abonné d'un réseau de télécommunications.

5. Procédé selon la revendication 2, dans lequel l'architecture de l'interface radio comprend une deuxième couche, qui permet le transport des messages des couches supérieures au moyen d'encapsulation de ces messages dans des trames, avec éventuellement segmentation/réassemblage, et de mécanismes de numérotation de ces trames avec acquittements et retransmissions.

6. Procédé selon la revendication 5, dans lequel une première sous-couche (RR) de la troisième couche spécifie notamment le chiffrement, la recherche de mobiles, l'allocation de canal, les activités en mode de veille et le transfert automatique ; le chiffrement s'appliquant à la couche 1 (ou couche physique) suivant les principes du GSM ; la recherche de mobiles utilisant à l'interface radio les principes de l'IS-95 et à l'interface H les principes du GSM ; l'allocation de canal dédié étant effectuée pour les échanges de signalisation ; le transfert automatique étant adapté au contexte radio du CDMA.

7. Procédé selon la revendication 5, dans lequel une deuxième sous-couche (MM) de la troisième couche spécifie notamment des procédures de localisation des stations mobiles, d'identification des stations mobiles et d'authentification d'une identité annoncée par une station mobile, selon la norme GSM et prenant en compte les spécificités du CDMA.

8. Procédé selon la revendication 5, dans lequel une troisième sous-couche (CC) de la troisième couche spécifie notamment des procédures d'établissement et de relâche d'appels entre une station mobile (MS) et un abonné du réseau, selon la norme GSM et prenant en compte les spécificités du CDMA.

9. Procédé selon la revendication 3 comprenant une deuxième couche selon la revendication 5, et où la troisième couche comprend une première sous-couche selon la revendication 6, une deuxième sous-couche selcn la revendication 7 et où la troisième sous-couche est conforme la revendication 8.

10. Procédé selon la revendication 8, dans lequel la procédure d'établissement d'appel par une station mobile (MS) comprend les opérations suivantes :
- envoi par la station mobile (MS) d'un message de requête d'un canal,
- allocation par le sous-système radio (BSS) à la station mobile (MS) d'un canal dédié à la signalisation seulement,
- envoi par la station mobile (MS), sur ce canal dédié, d'un message initial, ce message étant transmis par le sous-système radio (BSS) au commutateur du service mobile (MSC),
- échange entre la station mobile (MS) et le sous-système réseau (NSS), sur ledit canal dédié, d'une signalisation correspondant à un établissement d'appel selon la norme GSM,
- ordre par le commutateur du service mobile (MSC) de modifier le canal dédié pour le transfert des données d'usager,
- ordre donné par le sous-système radio (BSS) à la station mobile (MS) d'utiliser le canal dédié au trafic,
- échange du trafic et de la signalisation relative à l'appel en cours sur ce canal,
- relâche de l'appel.

11. Procédé selon la revendication 1, dans lequel ies stations mobiles surveillent des messages d'information diffusés par le réseau.

12. Procédé suivant la revendication 2, dans lequel les stations mobiles surveillent des messages d'information diffusées par le réseau, l'analyse de ces messages pouvant déterminer le déclenchement d'une procédure de mise à jour de localisation, le mode diversité étant interdit avant l'établissement de la couche 2 sur l'interface radio et la première cellule dans laquelle la station mobile a utilisé un canal dédié déterminant la localisation du mobile.
